# EUROPEAN PATENT APPLICATION

(11) **EP 3 382 550 A1**
(43) Date of publication of application: **03.10.2018**
(21) Application number: 17163478.5
(22) Date of filing: 29.03.2017
(51) Int. Cl.: G06F 11/263

(54) **TEST APPARATUS UND METHOD**

(71) Applicant: Vestel Elektronik Sanayi ve Ticaret A.S., 45030 Manisa (TR)
(72) Inventor: SAHIN GEBIZLI, Ceren, 45030 Manisa (TR); ÖCAL, Ömür, 45030 Manisa (TR)
(74) Representative: Ascherl, Andreas

(57) **Abstract**

The present invention provides a test apparatus (200), which comprises a test control and processing module (201), a human-machine interface (202, 204), at least one in/out port (203) adapted to provide two-way communication between the test control and processing module (201) and a platform under test, and a power supply (205) adapted to provide electrical power to the platform under test, under control of the test control and processing module (201). The test control and processing module (201) has access to a plurality of different pre-designed tests, each of which uses a different test method, and is configured to perform the different pre-designed tests using each of the plurality of different test methods on the platform under test. During its operation, the test apparatus (200) accesses the plurality of different pre-designed tests and determines whether at least one of the plurality of different test methods is appropriate to test the platform under test. It does this by performing a sample one of the pre-designed tests from each of the plurality of different test methods on the platform under test. If it finds that at least one of the different test methods is appropriate for testing the platform under test, it then selects one of the plurality of different test methods as the most appropriate one to use for testing the platform, based on the results of the sample tests. If, however, none of the different test methods is appropriate to test the platform under test, a new test method which is more appropriate to test the platform under test is introduced to the test apparatus instead. At least one new test to perform on the platform under test using either the selected or the newly introduced test method may then be designed, and the at least one newly designed test may be stored for subsequent retrieval by the test apparatus. In this way, the same test apparatus is able to perform two or more different tests on a plurality of different platforms using two or more different test methods, and the repertoire of different pre-designed tests available to the test apparatus can be expanded. The different platforms may, for example, be different electrical or electronic devices, such as televisions, set-top boxes (STBs) and mobile phones, or domestic appliances, such as dishwashers, washing machines, refrigerators and microwave ovens.

## Description

The present invention relates to a test apparatus according to claim 1, a method of operating a test apparatus according to claim 6 and a computer program product or a program code or system according to claim 15.

### Background of the Invention

Consumer demand for new electronic devices means that consumers desire each new generation of technology in the shortest time possible, at the least possible cost and with the fewest possible bugs or errors in any computer program, system or software which is installed in such devices. This puts pressure on the manufacturers of electrical and electronic devices to produce each new generation of device software as quickly as possible, whilst maintaining its reliability.

In order to achieve this, testing is a vital part of the product development process. However, testing is also one of the most expensive and time-consuming parts of the product development cycle. Test engineers are therefore always looking for more efficient ways of testing different device platforms, such as televisions, set-top boxes (STBs), mobile phones, refrigerators, washing machines, dishwashers, air conditioners and cookers. However, the test techniques which have been developed for these various different platforms tend to be different in each case and specific to that platform. In general, the different test techniques which have been developed also tend to run on general purpose computers and require the test engineers which use them to have a knowledge and understanding of how each different test technique works.

### Object of the Invention

It is therefore an object of the invention to provide a test apparatus, a method of operating a test apparatus, and a computer program product or a program code or system.

### Summary of the Invention

The object of the invention is solved by a test apparatus according to claim 1. The test apparatus at least comprises a test control and processing module, a human-machine interface therewith, at least one in/out port adapted to provide two-way communication between the test control and processing module and a platform under test, and a power supply adapted to provide electrical power to the platform under test, under control of the test control and processing module. The test control and processing module has access to a plurality of different pre-designed tests, each of which uses a different test method, and the test control and processing module is configured to perform a sample one of the pre-designed tests from each of the plurality of different test methods on the platform under test.

As used herein, the term "platform" refers to a distinct category of device or apparatus to be tested. Thus, different platforms may comprise, for example, different electrical or electronic devices or apparatuses, such as televisions, set-top boxes (STBs) and mobile phones, or different domestic electrical appliances, such as dishwashers, washing machines, refrigerators, cookers, microwave ovens, heating, ventilation and air-conditioning systems, and so on. On the other hand, two different televisions, for example, although they may differ in one or more material respects with regard to both their structure and function, are just two different examples of one and the same platform, as would be two different mobile phones, and so on.

The test apparatus as described herein has the advantage that one and the same test apparatus is able to perform two or more different tests on a plurality of different platforms using two or more respectively different test methods, and without a test engineer using the apparatus needing to have a detailed knowledge or understanding of how each of the different test methods works. Thus for example, the test apparatus could perform model-based testing on televisions, pairwise testing on refrigerators and java scripting on smart phones. This example represents three different test methods performed on three different platforms. This solution obviates the need to have different test apparatuses for different platforms, thereby saving time, money and effort when testing different platforms.

Moreover, the human-machine interface of the test apparatus can be used not only to guide a test engineer through the testing process, but also to introduce new test methods to the test apparatus, thus allowing the repertoire of different test methods which the test apparatus is able to use to be expanded, and thereby also expanding the number of different platforms which the test apparatus can be used for testing.

Advantageous embodiments of the invention may be configured according to any claim and/or part of the following description.

In one possible preferred embodiment, the test apparatus further comprises a memory configured to store at least one of the pre-designed tests of each of the plurality of different test methods. This solution is beneficial because the plurality of different pre-designed tests, each of which uses a different test method, are then accessible to the test control and processing module without any need to enter the plurality of different pre-designed tests to the test apparatus from an external source.

Alternatively or additionally, the test apparatus may further comprise a network communications module adapted to provide communication between the test control and processing module and an external device or system. This solution is beneficial because it allows the test control and processing module to gain access to a wider range of different pre-designed tests, each of which uses a different test method.

If so, the test apparatus may be in communication via the network communications module with a memory for storing the at least one pre-designed test of each of the plurality of different test methods externally to the test apparatus. This solution is beneficial because it allows the pre-designed tests to be stored, for example, in a cloud computing storage facility for retrieval by the test apparatus.

Preferably, the human-machine interface is configured to allow input of a new test method to the test apparatus for use by the test control and processing module. This solution is beneficial because apart from allowing the human-machine interface to be used for communication with the test control and processing module during testing of a platform under test, for example for displaying and controlling the behaviour of the platform under test, it also allows a new test method to be introduced to the test apparatus via the human-machine interface, as well as for new tests to be designed using the human-machine interface.

The present invention also relates to a method of operating a test apparatus. The method at least comprises providing the test apparatus with a plurality of different pre-designed tests, each of which uses a different test method, connecting the test apparatus to a platform under test, and determining whether at least one of the plurality of different test methods is appropriate to test the platform under test by performing a sample one of the pre-designed tests from each of the plurality of different test methods on the platform under test. If so, the method further comprises selecting one of the plurality of different test methods as the most appropriate one of the plurality of different test methods to test the platform under test based on the results of the sample tests. If not, however, the method instead further comprises introducing a new test method to the test apparatus which is more appropriate to test the platform under test.

This solution at least comprises the following advantages. Since the test apparatus has access to a plurality of different pre-designed tests, each of which uses a different test method, by identifying the most appropriate one of the plurality of different test methods to use for testing the platform under test, one and the same test apparatus can be used to test two or more different platforms using respectively different test methods. Moreover, by introducing a new test method to the test apparatus which is more appropriate to test the platform under test than any of the test methods used by the plurality of different pre-designed tests, the repertoire of different test methods available to the test apparatus for testing different platforms can also be expanded.

The plurality of different pre-designed tests may use test methods comprising at least one of model-based testing, pairwise testing (also known as all-pairs testing), test automation and java scripting.

For example, model-based testing is a way of testing a computer program or system, which creates a model of the platform under test. The model is an abstract representation of the desired, intended or predicted operation of the platform under test. In model-based testing, the model is used to create one or more test scenarios at the same level of abstraction as the model. These test scenarios together form an abstract test suite. The abstract test suite is then used to create a corresponding executable test suite for execution on the platform under test itself, in order to test the actual operation of the platform under test, for comparison with the desired, intended or predicted operation of the platform under test.

Test automation is another way of testing a computer program or system. This uses computer software, which is distinct from the computer program or system of the platform under test, to apply one or more test scenarios to the platform under test and to compare the actual operation of the platform under test as a result of these test scenarios with the desired, intended or predicted operation of the platform under test.

Preferably, the method further comprises designing at least one new test to perform on the platform under test using either the selected or the newly introduced test method, and storing the at least one newly designed test for subsequent retrieval by the test apparatus. This further feature of the method is optional because one of the plurality of different pre-designed tests may, in fact, be found to be suitable for testing the platform under test. However, if not, this further optional feature has the advantage that it allows the test apparatus to use the newly designed test to test the platform under test and for the newly designed test to be used by the test apparatus for testing different types of the same platform, if the test apparatus subsequently retrieves the newly designed test from storage.

If so, the at least one newly designed test may be stored in a memory of the test apparatus. This solution is beneficial because the newly designed test is then accessible to the test apparatus in the future without any need to retrieve the newly designed test from an external source.

Alternatively or additionally, the method may further comprise transmitting the at least one newly designed test from the test apparatus to an external memory, and storing the at least one newly designed test externally to the test apparatus for subsequent retrieval by the test apparatus. This solution is beneficial because it allows the newly designed test to be stored, for example, in a cloud computing storage facility for retrieval by the test apparatus.

At least one of the pre-designed tests of each of the plurality of different test methods may be stored in a memory of the test apparatus. This solution is beneficial because the plurality of different pre-designed tests are then accessible to the test apparatus without the need to enter them to the test apparatus from an external source.

Alternatively or additionally, at least one of the pre-designed tests of each of the plurality of different test methods may be stored externally to the test apparatus and retrieved by the test apparatus. This solution is beneficial because it allows the plurality of different pre-designed tests to be stored, for example, in a cloud computing storage facility for retrieval by the test apparatus.

The method may further comprise generating a plurality of test cases for performing either one of the pre-designed tests or the newly designed test, and performing the respective test on the platform under test using a respective one of either the selected test method or the newly introduced test method. This solution is beneficial because it can be used to expand the method of operating a test apparatus into a method of testing the platform under test. In other words, such a method can be used not only to carry out a preliminary procedure in order to determine the most appropriate method for testing the platform under test, but can then also be used to perform the most appropriate method for testing the platform under test upon the platform under test.

In a preferred embodiment, the method further comprises performing two or more different tests on a plurality of different platforms using two or more respectively different test methods and using the same test apparatus. This solution is beneficial because it obviates the need to have different test apparatuses for different platforms, thereby saving time, money and effort when testing different platforms.

The present invention further relates to a computer program product or a program code or system for executing one or more than one of the herein described methods.

Further features, goals and advantages of the present invention will now be described in association with the accompanying drawings, in which exemplary components of the invention are illustrated. Components of the devices and methods according to the invention which are at least essentially equivalent to each other with respect to their function can be marked by the same reference numerals, wherein such components do not have to be marked or described in all of the drawings.

In the following description, the invention is described by way of example only with respect to the accompanying drawings.

### Brief Description of the Drawings

Fig. 1 is a perspective view schematically showing an embodiment of a test apparatus;
Fig. 2 is a schematic block diagram of elements of the test apparatus of Fig. 1;
Fig. 3 is a diagram schematically showing connection of the test apparatus of Fig. 1 to a platform under test; and
Fig. 4 is a schematic flow diagram representing an embodiment of a method of operation of a test apparatus.

### Detailed Description of the Drawings

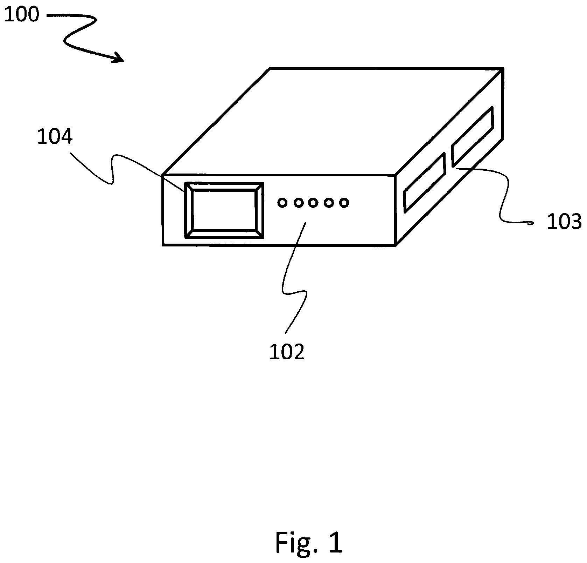

Fig. 1 schematically shows an embodiment of a test apparatus 100. The test apparatus 100 comprises a test control and processing module (not visible in Fig. 1) and a human-machine interface, whereby a user of the test apparatus 100 may interact with the test control and processing module comprised therein. The human-machine interface comprises a plurality of hardware controls and displays 102, such as knobs, buttons and sliders, and displays such as dials and LEDs. The human-machine interface also comprises a touch-sensitive display screen 104 which provides virtual controls and displays, such as on-screen buttons and sliders and on-screen dials and lights. The test apparatus 100 further comprises a plurality of in/out ports 103, which provide for two-way communication between the test control and processing module of the test apparatus 100 and a platform under test. The test apparatus 100 further comprises a power supply (also not visible in Fig. 1) adapted to provide electrical power to the platform under test, under control of the test control and processing module. Electrical power may be supplied by the test apparatus 100 to the platform under test via one or more of the plurality of in/out ports 103.

The test control and processing module has access to a plurality of different pre-designed tests, each of which uses a different test method, such as model-based testing, pairwise testing (also known as all-pairs testing), test automation and javascripting. The tests themselves may be constructed, for example, using Python scripting. The test control and processing module is configured to perform a sample one of the pre-designed tests from each of the plurality of different test methods on the platform under test. The test apparatus 100 is also able to perform two or more tests, each of which uses a different test method, on a plurality of different platforms. As may be seen in Fig. 1, the test apparatus 100 is not a general purpose computer, but is rather a test-dedicated hardware device. The pre-designed tests may be stored in a memory of the test apparatus 100 (also not visible in Fig. 1) or on another device or system, such as a cloud computing and storage facility, which is external to the test apparatus 100 and from which the test apparatus 100 can retrieve the pre-designed tests.

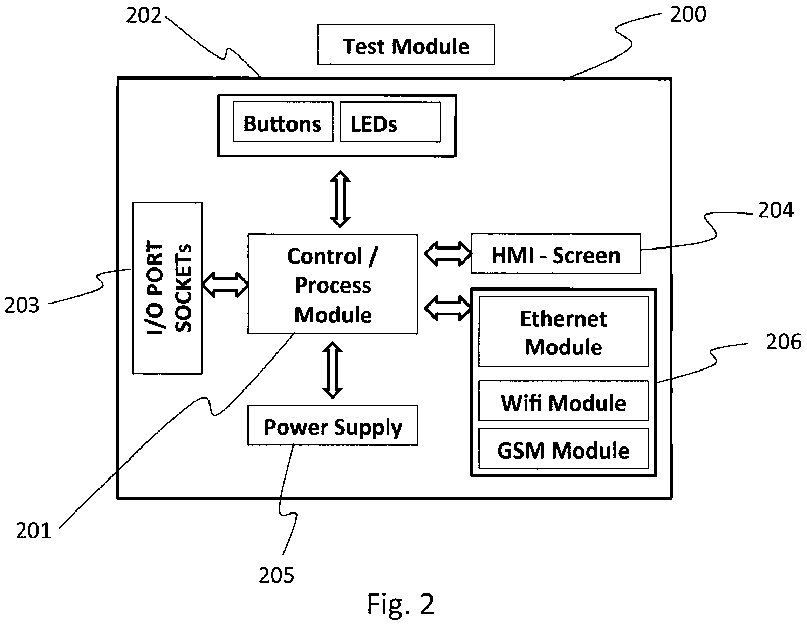

Fig. 2 is a schematic block diagram of the elements of the test apparatus shown in Fig. 1. As may be seen in Fig. 2, the test control and processing module 201 of the test apparatus 200 is connected in two-way communication with each of the hardware controls and displays 202, with the plurality of in/out ports 203, with the touch-sensitive display screen 204 and with the power supply 205. The test apparatus 200 further comprises a network communications module 206, adapted to provide communication between the test control and processing module 201 and an external device or system, such as the internet, a cloud computing and storage facility, a hardware computing device, and so on. The network communications module 206 may comprises any one or more of an Ethernet communications module, a near-field communications module, such as wifi, and a telecommunications module, such as global system for mobile communications (GSM), and so on. The network communications module 206 facilitates storage and retrieval of the pre-designed tests externally to the test apparatus 200. The hardware controls and displays 202 and the touch-sensitive display screen 204 are configured to allow a user to input a new test method to the test apparatus 200 for use by the control and processing module 201.

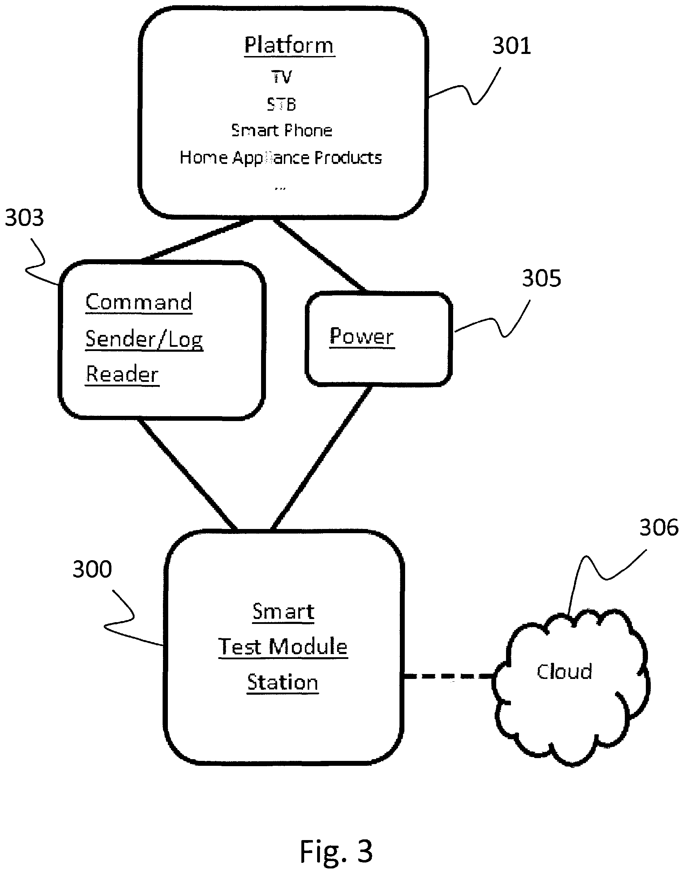

Fig. 3 schematically shows how, during use, a test apparatus 300 is connected for communication with a platform under test 301, in order to perform at least one test thereon. The platform under test 301 may, for example, be a consumer electronic device, such as any one of a television, a set-top box (STB) or a mobile phone, or a domestic electrical appliance, such as a dishwasher, washing machine, refrigerator, microwave oven, and so on, or any other electrical or electronic device, the operation of which needs to be tested. As may be seen in Fig. 3, the test apparatus 300 sends commands to the platform under test 301 and reads and logs the behaviour of the platform under test 301 in response to those commands via a command sender/log reader 303. The test apparatus 300 also supplies power 305 to the platform under test 301 and controls the supply of power thereto. Electrical power is also supplied to the test apparatus 300 itself. The test apparatus 300 is in communication with a cloud computing and storage facility 306, in order to store one or more tests for future use and/or to retrieve one or more previously stored tests.

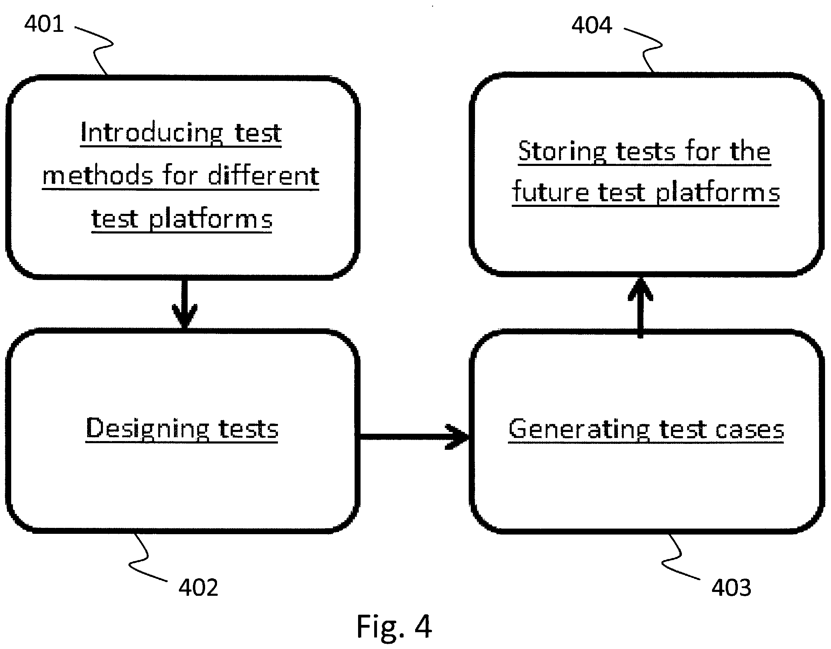

Fig. 4 schematically represents an embodiment of a method of operating a test apparatus, such as that shown in Figs. 1 to 3. During operation of the test apparatus, the test apparatus is provided with a plurality of different pre-designed test. Each of the different pre-designed tests uses a different test method. The plurality of different test methods may, for example, comprise at least one of model-based testing, pairwise testing, test automation and javascripting. The pre-designed tests may be stored in a memory of the test apparatus or they may be stored externally to the test apparatus and retrieved by the test apparatus. In either case, the test apparatus is connected to a platform under test. The test apparatus then determines whether at least one of the plurality of different test methods is appropriate to test the platform under test by performing a sample one of the pre-designed tests from each of the plurality of different test methods on the platform under test. If at least one of them is appropriate, the test apparatus selects one of the plurality of different test methods as the most appropriate one for testing the platform under test, based on the results of the sample tests. However, if none of them is appropriate, a user may introduce a new test method to the test apparatus which is more appropriate to test the platform under test, as represented in Fig. 4 by box 401.

One or more of the pre-designed tests may already be suitable for testing the platform under test. If not, the user can design at least one new test to perform on the platform under test, which may use either the selected test method or the newly introduced test method, as represented in Fig. 4 by box 402. The new test or tests themselves may be constructed, for example, using Python scripting. The test apparatus can then generate a plurality of test cases for performing either one of the pre-designed tests or the at least one newly designed test, as appropriate, as represented by box 403, and perform the respective test on the platform under test using a respective one of either the selected test method or the newly introduced test method.

The test apparatus can store any newly designed tests for subsequent retrieval by the test apparatus, as represented in Fig. 4 by box 404. Like the pre-designed tests, the at least one newly designed test may be stored in a memory of the test apparatus or it may be stored externally to the test apparatus for subsequent retrieval by the test apparatus. Thus, the next time that the test apparatus is used, the newly designed test or tests will have become part of the repertoire of pre-designed tests which the test apparatus has access to. This allows the test apparatus to perform two or more different tests on a plurality of different platforms using two or more different test methods.

In summary, therefore, the present invention provides a test apparatus at least comprising a test control and processing module, a human-machine interface, at least one in/out port adapted to provide two-way communication between the test control and processing module and a platform under test, and a power supply adapted to provide electrical power to the platform under test, under control of the test control and processing module. The test control and processing module has access to a plurality of different pre-designed tests, each of which uses a different test method, and is configured to perform the different pre-designed tests using each of the plurality of different test methods on the platform under test. During its operation, the test apparatus accesses the plurality of different pre-designed tests and determines whether at least one of the plurality of different test methods is appropriate to test the platform under test. It does this by performing a sample one of the pre-designed tests from each of the plurality of different test methods on the platform under test. If it finds that at least one of the different test methods is appropriate for testing the platform under test, it then selects one of the plurality of different test methods as the most appropriate one to use for testing the platform, based on the results of the sample tests. If, however, none of the different test methods is appropriate to test the platform under test, a new test method which is more appropriate to test the platform under test is introduced to the test apparatus instead. At least one new test to perform on the platform under test using either the selected or the newly introduced test method may then be designed, and the at least one newly designed test may be stored for subsequent retrieval by the test apparatus. In this way, the test apparatus is able to perform two or more different tests on a plurality of different platforms using two or more different test methods, and the repertoire of different pre-designed tests available to the test apparatus can be expanded.

**Reference Numerals:**

| | | | |
|---|---|---|---|
| 100, 200, 300 | Test apparatus | 301 | Platform under test |
| 201 | Test control/process module | 303 | Command sender/log reader |
| 102, 202 | Hardware controls and displays | 306 | Cloud computing facility |
| | | 401 | Introduce test methods |
| 103, 203 | In/out ports | 402 | Design tests |
| 104, 204 | Touch-sensitive display screen | 403 | Generate test cases |
| 205, 305 | Power supply | 404 | Store tests for future test platforms |
| 206 | Network communications module | | |

## Claims

1. A test apparatus (100, 200, 300) at least comprising:
a test control and processing module (201);
a human-machine interface (102, 104, 202, 204) therewith;
at least one in/out port (103, 203) adapted to provide two-way communication between the test control and processing module (201) and a platform under test (301); and
a power supply (205, 305) adapted to provide electrical power to the platform under test, under control of the test control and processing module (201);
wherein the test control and processing module (201) has access to a plurality of different pre-designed tests, each of which uses a different test method, and the test control and processing module (201) is configured to perform a sample one of the pre-designed tests from each of the plurality of different test methods on the platform under test (301).

2. A test apparatus (100, 200, 300) according to claim 1, further comprising a memory configured to store at least one of the pre-designed tests of each of the plurality of different test methods.

3. A test apparatus (100, 200, 300) according to claim 1 or claim 2, further comprising a network communications module (206) adapted to provide communication between the test control and processing module (201) and an external device or system.

4. A test apparatus (100, 200, 300) according to claim 3, in communication via the network communications module (206) with a memory for storing at least one of the pre-designed tests of each of the plurality of different test methods externally to the test apparatus.

5. A test apparatus (100, 200, 300) according to any one of the preceding claims, wherein the human-machine interface (102, 104, 202, 204) is configured to allow input of a new test method thereto for use by the test control and processing module (201).

6. A method of operating a test apparatus (100, 200, 300), the method at least comprising:
providing the test apparatus with a plurality of different pre-designed tests, each of which uses a different test method;
connecting the test apparatus (100, 200, 300) to a platform under test (301);
determining whether at least one of the plurality of different test methods is appropriate to test the platform under test by performing a sample one of the pre-designed tests from each of the plurality of different test methods on the platform under test (301);
if so, selecting one of the plurality of different test methods as the most appropriate one of the plurality of different test methods to test the platform under test (301) based on the results of the sample tests; and
if not, introducing (401) a new test method to the test apparatus which is more appropriate to test the platform under test.

7. A method according to claim 6, wherein the plurality of different pre-designed tests use test methods comprising at least one of model-based testing, pairwise testing, test automation and javascripting.

8. A method according to claim 6 or claim 7, further comprising:
designing (402) at least one new test to perform on the platform under test (301) using either the selected or the newly introduced test method; and
storing (404) the at least one newly designed test for subsequent retrieval by the test apparatus.

9. A method according to claim 8, wherein the at least one newly designed test is stored in a memory of the test apparatus (100, 200, 300).

10. A method according to claim 8 or claim 9, further comprising:
transmitting the at least one newly designed test from the test apparatus (100, 200, 300) to an external memory; and
storing the at least one newly designed test externally to the test apparatus for subsequent retrieval by the test apparatus.

11. A method according to any one of claims 6 to 10, wherein at least one of the pre-designed tests of each of the plurality of different test methods is stored in a memory of the test apparatus (100, 200, 300).

12. A method according to any one of claims 6 to 11, wherein at least one of the pre-designed tests of each of the plurality of different test methods is stored externally to the test apparatus (100, 200, 300) and retrieved by the test apparatus.

13. A method according to any one of claims 6 to 12, further comprising:
generating (403) a plurality of test cases for performing either one of the pre-designed tests or the newly designed test; and
performing the respective test on the platform under test (301) using a respective one of either the selected test method or the newly introduced test method.

14. A method according to any one of claims 6 to 13, further comprising performing two or more different tests on a plurality of different platforms using two or more respectively different test methods and using the same test apparatus.

15. A computer program product or a program code or system for executing one or more than one of the methods of claims 6 to 14.
